# EUROPÄISCHE PATENTSCHRIFT

(11) **EP 2 258 497 B1**
(45) Veröffentlichungstag und Bekanntmachung des Hinweises auf die Patenterteilung: **16.05.2012**
(21) Anmeldenummer: 10450089.7
(22) Anmeldetag: 19.05.2010
(51) Int. Cl.: B21J 1/06, B21J 3/00, B21B 45/00, C21D 1/68

(54) **Verfahren zur Warmformgebung eines Werkstückes und Mittel zur Verminderung der Wärmeabstrahlung**
Method for hot forming a workpiece and equipment for reducing the workpiece's heat emission
Procédé de formage à chaud d'une pièce et moyen de réduction du rayonnement de chaleur de la pièce

(30) Priorität: 05.06.2009 AT 8782009
(43) Veröffentlichungstag der Anmeldung: 08.12.2010
(73) Patentinhaber: Böhler Schmiedetechnik GmbH & Co KG, 8605 Kapfenberg (AT)
(72) Erfinder: Rockenschaub, Karin, 8793 Trofaiach (AT); Marketz, Wilfried, 84375 Kirchdorf am Inn (DE)
(74) Vertreter: Wildhack, Andreas

(56) Entgegenhaltungen:
- DE-A1- 10 008 651
- GB-A- 693 114
- JP-A- 10 156 473
- JP-A- 62 137 117
- US-A- 2 869 227

## Beschreibung

Die Erfindung betrifft ein Verfahren zur Warmformgebung durch Massivumformung wie Schmieden oder Walzen eines Werkstückes oder Vormaterials aus Metall oder aus einer intermetallischen Verbindung bei einer Temperatur von über 1000°C.

Weiters bezieht sich die Erfindung auf ein Mittel für eine Beschichtung zur Verminderung der Wärmeabstrahlung von einem auf Umformtemperatur gewärmten Werkstück oder Vormaterial.

Eine Warmverformung eines Werkstückes aus Metall, wie Gussblock oder primär verformtes Vormaterial aus Metall oder aus intermetallischen Verbindungen zu einem Schmiedeteil, erfordert bei Werkstoffen mit schlechten Verformungseigenschaften eine genaue Temperaturführung vom Wärmen bis zum Austrag des Teiles aus dem Umformmittel.

Eine ausreichende Verformbarkeit des Materials des Werkstückes ist oft nur in einem engen Temperaturfenster gegeben, weil tiefere Formgebungstemperaturen zu einer Brüchigkeit und höhere Temperaturen ebenfalls zu einer Brüchigkeit und/oder zu einer Grobkombildung des Gefüges des Werkstoffes führen.

Ggf. liegt die Grenze einer ausreichenden Verformbarkeit bei hohen Temperaturen von über 1000°C.

Die abgestrahlte Wärmeenergie vergrößert sich im Allgemeinen bei steigender Temperatur mit der vierten Potenz, sodass bei hohen Oberflächentemperaturen des Werkstückes der Energieverlust und der Temperaturabfall im Randbereich in der Zeiteinheit hoch sind.

Bei erforderlich hohen Umformtemperaturen ist es somit schwierig und/oder aufwändig, auch im Randbereich des Werkstückes über eine erforderliche Zeitspanne eine Temperatur mit ausreichender Verformbarkeit des Werkstoffes sicher zu stellen.

Werkstücke werden in üblicher Weise in einem Ofen auf Umformtemperatur gewärmt. Das durchwärmte Teil wird in der Folge mit bekannten Mitteln aus dem Ofen ausgetragen, zu einem formgebenden Mittel verbracht, auf einen Rollgang oder ein Werkzeugteil aufgelegt und mit Werkzeugen umformend verarbeitet. Während dieser Zeitspanne strahlt die Oberfläche des Werkstückes Wärme ab und/oder diese wird in die Werkzeuge abgeleitet.

Das allgemeine Problem besteht also in einem raschen Temperaturverlust der oberflächennahen Zone des Werkstückes und einem sich daraus ergebenden Auftreten von Fehlern, wie bspw. Rissen, bei einer Materialumformung.

Zur Lösung dieses Problems wurde schon vorgeschlagen und erfolgt auch ggf. ein Verbringen des durchwärmten Werkstückes in kurzer Zeit. Allerdings ist es meist nicht möglich, die Wärmeaggregat- und die Umformeinrichtung in unmittelbarer Nähe zu positionieren.

Weiters wurde schon versucht, das Werkstück derart hoch zu erhitzen, dass auch bei einem Temperaturabfall dessen Oberflächenzone noch im Temperaturbereich der Verformbarkeit des Werkstoffes liegt. Allerdings können derart eine Vergröberung und/oder Verschlechterung der Mikrostruktur oder Zentrumsfehler entstehen.

Es sind auch, wie in JP 10 156 473A offenbart, Verfahren bekannt, das Werkstück in einer Kapsel einzuschließen und in dieser zu wärmen und zu verformen. Ein derartiges Verfahren kann im Hinblick auf eine Umformung eines Teiles in einem engen Temperaturfenster durchaus zielführend sein, erfordert jedoch einen hohen Aufwand.

Verfahrenstechnisch ist auch ein Isotherm-Schmieden des Werkstückes möglich und zielführend, bei welchem die Werkzeuge auf eine Temperatur nahe der Umformtemperatur gewärmt sind. Ein derartiges Verfahren ist jedoch höchst aufwändig und kostenintensiv.

Zur Schmierung der Pressflächen beim Verformen wurde schon versucht (US 2 869 227A), keramisches Pulver mittels Flammsprühen auf das Werkzeug und ggf. das

Werkstück auszutragen und derart einen dauerhaften Überzug zu schaffen.

Wärme-Abstrahlungsschutzmittel bzw. dgl. Hauben für Werkstücke können nach JP 62 137 117A mittels hitzebeständiger Bleche, welche bspw. durch Plasma-Hochtemperatur-Spn:ihen mit keramischem Pulver beschichtet sind, hergestellt werden.

Glasartige, oxidkeramische Beschichtungen (DE 100 08 651A1) können ein Eindiffundieren von leichten Atomen bei einer thermo-chemischen Behandlung von Eisenbasiswerkstoffen unterdrücken und Suspensionen mit anorganischem Material sind beim Walzen von mehrlagigem Walzgut gemäß GB 693 114A als Trennmittel gegen ein Verschweißen der Lagen verwendbar.

Die Erfindung zielt nun darauf ab, ein neues Verfahren der eingangs genannten Art zur Umformung eines Werkstückes anzugeben, welches die Nachteile der bekannten Verfahren überwindet.

Dieses Ziel wird bei einem Verfahren gemäss Anspruch 1 erreicht.

Die mit dem erfindungsgemäßen Verfahren erreichten Vorteile sind im Wesentlichen darin zu sehen, dass insb. während eines Verbringes des Werkstückes zum formgebenden Mittel die Abstrahlung und somit der Temperaturverlust in der Zeiteinheit reduziert werden. Dies gilt auch beim Auflegen des Werkstückes auf einen Rollgang oder auf ein Werkzeugteil. Überraschend für den Fachmann hat sich gezeigt, dass ein beschichtetes Werkstück beim Wärmen im Ofen keine längeren Wärmzeiten erfordert.

Es ist erfindungsgemäß wichtig, dass die Beschichtung des Werkstückes mit einer gleichmäßigen Schichtstärke erfolgt und dass keinerlei Abplatzen der Schicht beim Wärmen und beim nachfolgenden Verbringen zum formgebenden Mittel gegeben ist. Die Beschichtung vermindert auch zumindest beim ersten Vertormungsschritt den Wärmeübergang vom Werkstück in das Werkzeug.

Eine besonders gute Haftung der Schicht kann nach der Erfindung erreicht werden, wenn eine Beschichtung der Oberfläche des Werkstückes oder Vormaterials bei einer Temperatur desselben von über 100°C, vorzugsweise bei etwa 200°C, erfolgt.

Wenn, wie gefunden wurde, eine Beschichtung der Oberfläche des Werkstückes oder Vormaterials durch Tauchen in ein oder Besprühen mit einem Beschichtungsmittel erfolgt, kann in günstiger Weise eine weitestgehend gleichmäßige Schichtstärke auf der Oberfläche erreicht werden.

Um ein Optimum für ein Vermindern der Abstrahlung von Wärmeenergie von der Oberfläche und gute Schichthaftung einerseits und eine gewünscht hohe Oberflächengüte des verformten Werkstückes andererseits zu erreichen, kann es von Vorteil sein, wenn die Beschichtung mit einer verfestigten Schichtstärke von größer als 0.1 mm, bevorzugt mit einer Schichtstärke von 0.3mm bis 3.0mm, durchgeführt wird.

Die weitere Aufgabe der Erfindung besteht darin, ein Mittel für eine Beschichtung zur Verminderung der Wärmeabstrahlung von einem auf Umformtemperatur gewärmten Werkstück oder Vormaterial zu schaffen, welches Mittel leicht dünn und mit gleicher Schichtstärke auf die Oberfläche eines Werkstückes vor dem Wärmen aufbringbar ist, während des Wärmevorganges im Ofen nicht abblättert, beim Verbringen zum Werkzeug hin bis zum ersten Umformschritt eine ausreichende Haftung hat und die Schmiedestückgüte verbessert.

Diese Aufgabe wird durch ein Mittel gemäss Anspruch 5 gelöst.

Die Oxidphase wirkt als hitzebeständige Isolierkomponente, wobei ein oder mehrere Additiv(e) oder Haftmittel mit geringeren Anteilen die Oxidkörner verbindet (verbinden) und auf dem Substrat hält (halten). Die flüssige(n) Komponente(n) dient (dienen) der Homogenisierung der Phasen und einer Einstellung eines gewünschten Flüssigkeitsgrades zur homogenen Aufbringung auf die Oberfläche des Werkstückes oder Teiles.

Ein Mittel, bei welchem die Hauptkomponente bzw. Oxidphase aus Zirkonoxid mit einem Anteil in Gew.-% von größer 70, bevorzugt von 80 bis 98, insb. von 90 bis 97, gebildet ist, hat sich im Hinblick auf eine wesentliche Verringerung der Wärmeabstrahlung als besonders günstig herausgestellt.

Wenn nun der Anteil von Zirkonoxid größer ist als 70 Gew.-%, kann ein Mittel, bei welchem die Additive aus Methylzellulose und/oder Mikrosilika mit Anteilen in Gew.-% von 0.1 bis 1.0, bevorzugt 0.2 bis 0.7, bzw. 1.0 bis 10.0, bevorzugt 2.0 bis 8.0, gebildet sind, besonders vorteilhaft für eine Beschichtung von TiAI-Legierungen verwendet werden, weil dieser Legierungstyp und der Beschichtungswerkstoff nur geringfügig von einander abweichende Ausdehnungskoeffizienten haben.

Als flüssige Komponente ist dem Mittel Natriumsilikatglas mit einem Anteil in Gew.-% von 15 bis 65, bevorzugt von 20 bis 60, zugesetzt, wobei sich dieser Zusatz auf die Oxidphase mit dem (den) Additiv(en) bezieht.

Als besonders gleichmäßig auftragbar haftend und gut wärmedämmend wirksam hat sich ein Mittel herausgestellt, bei welchem die Oxidphase mit einem Korndurchmesser von 1µm bis 50µm gebildet ist, vorzugweise eine mittlere Korngröße von d₅₀ = 12.5µm aufweist.

Wie vorher bei der thermischen Dehnung erwährt, hat sich eine Verwendung des vorgenannten Verfahrens zur Warmformgebung eines Werkstückes und die Verwendung eines Mittels gemäß obiger Angaben zur Verminderung der Wärmeabstrahlung von einem auf Umformtemperatur gewärmten Werkstück für die Warmverformung von Teilen aus einer Gamma-Titan-Aluminium-Basislegierung als besonders vorteilhaft herausgestellt, wobei ein Wärmen dieser Legierung bis über 1280°C vorgenommen werden kann und die fehlerfreie Beschichtung eine erhebliche Verminderung des Temperaturabfalls der oberflächennahen Zone des Werkstückes in der Zeiteinheit bewirkt.

An Hand von Ergebnissen aus den Entwicklungsarbeiten und aus den vergleichenden Untersuchungen des Temperaturverlaufes über die Zeit an Versuchskörpem soll die Erfindung näher beschrieben werden.

Es zeigen:
- Fig. 1: thermische Dehnung einer TiAl-Legierung und einer Zirkonoxidbeschichtung über der Temperatur
- Fig. 2: Probenkörper mit Position der Messstellen
- Fig. 3: Abkühlkurven über der Zeit von beschichtetem Stab und blankem (unbeschichtetem) Stab in einer oberflächennahen Position
- Fig. 4: Abkühlkurven über der Zeit vom beschichtetem Stab und blankem Stab im Stabkem

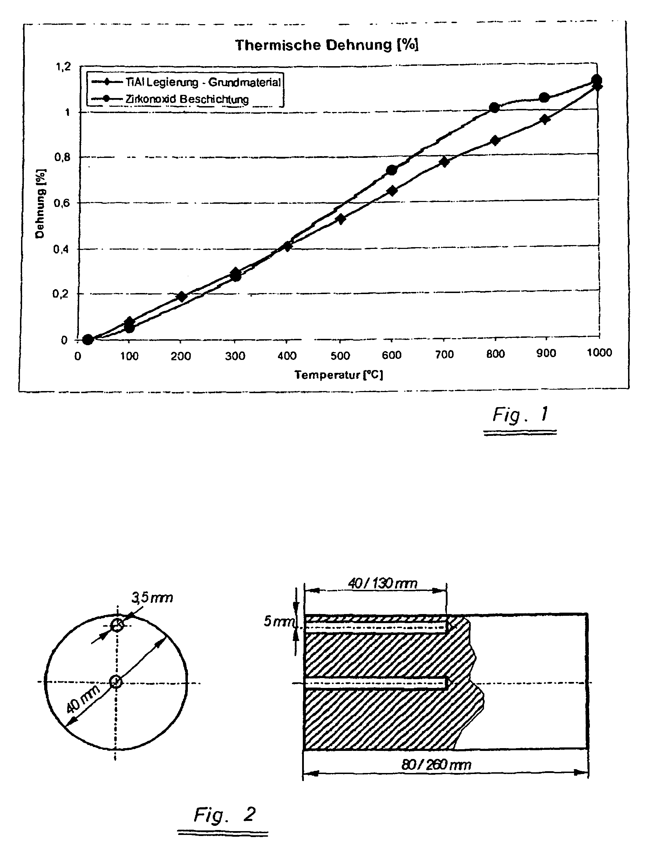

Fig. 1 zeigt die Ausdehnung eines Substrates aus einer Gamma-Titan-Aluminium-Basislegierung und einer Zirkon-Beschichtung in Abhängigkeit von der Temperatur bis zu 1000°C. An Hand der Darstellung ist zu bemerken, dass die thermische Dehnung beider Stoffe lediglich geringe Unterschiede zeigt, was eine Vermeidung eines Abplatzens der Schicht vom Grundmaterial begründet.

In Fig. 2 ist ein Probekörper mit einem Durchmesser von 40mm Ø dargestellt, welcher eine oberflächennahe Bohrung und eine zentrische Bohrung für Thermoelemente aufweist.

Die Versuche erfolgten derart, dass unbeschichtete und beschichtete Probekörper mit Thermoelementen ausgerüstet und auf eine Temperatur von ca. 1290°C gewärmt wurden. Nach einer Durchwärmung wurden die Probekörper aus dem Inertgasofen ausgebracht, auf einer feuerfesten Unterlage positioniert und der Temperaturvedauf in Abhängigkeit von der Zeit gemessen.

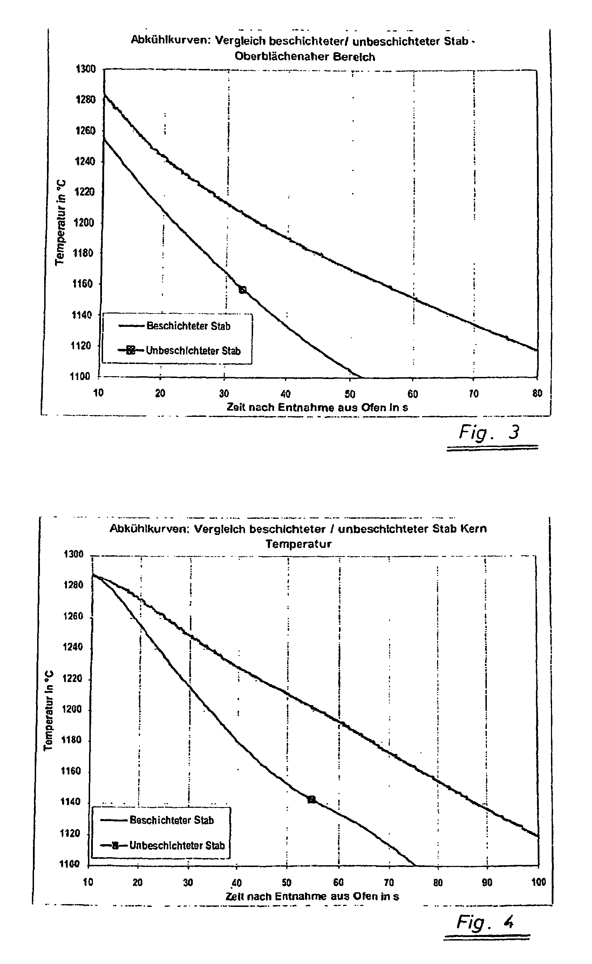

Fig. 3 zeigt den Temperaturabfall in Abhängigkeit von der Zeit in der oberflächennahen Zone von unbeschichteten und beschichteten Probekörpern. Ca. 30 sec. nach dem Austrag der Probekörper weist ein unbeschichteter Stab im Oberflächenbereich eine Temperatur von ca. 1165°C und ein mit einer Zirkonschicht versehener eine solche von ca. 1215°C auf.

Fig. 4 zeigt den Temperaturabfall im Zentrum des Probekörpers.

Fig. 3 und Fig. 4 bedürfen für einen Fachmann keiner weiteren Erklärung und zeigen deutlich eine die Wärmeabstrahlung vermindernde Wirkung einer Zirkonoxid-Basis-Beschichtung eines Probekörpers aus einer Gamma-Titan-Aluminium-Basislegierung.

## Patentansprüche

1. Verfahren zur Warmformgebung durch Massivumformung wie Schmieden oder Walzen eines Werkstückes oder Vormaterials aus Metall oder aus einer intermetallischen Verbindung bei einer Temperatur von über 1000°C, **dadurch gekennzeichnet, dass** in einem ersten Schritt die Oberfläche des Werkstückes mit einem Beschichtungsmittel, bestehend aus einer Oxidphase *aus Zirkonoxid,* als Hauptkomponente und einem oder mehreren Additiv(en) *aus Methylzellulose und*/*oder Mikrosilikat* als Zusatz und flüssigen Komponenten aus *Natriumsilikatglas*
zumindest teilweise abgedeckt und die Beschichtung verfestigen gelassen wird, wonach in einem Folgeschritt ein Anwärmen mit einer Durchwärmung des Vormaterials auf Verformungstemperatur erfolgt und dieses zu einem formgebenden Mittel verbracht und mit diesem zu einem Formkörper oder Walzprodukt verarbeitet bzw. geschmiedet oder gewalzt wird.

2. Verfahren nach Anspruch 1, **dadurch** gekenntzeichnet, dass eine Beschichtung der Oberfläche des Werkstückes oder Vormaterials bei einer Temperatur desselben von über 100°C, vorzugsweise bei 200°C, erfolgt.

3. Verfahren nach Anspruch 1 oder 2, **dadurch gekennzeichnet, dass** eine Beschichtung der Oberfläche des Werkstückes oder Vormaterials durch Tauchen in ein oder Besprühen mit einem Beschichtungsmittel erfolgt.

4. Verfahren nach einem der Ansprüche 1 bis 3, **dadurch gekennzeichnet, dass** die Beschichtung mit einer verfestigten Schichtstärke von größer als 0.1 mm, bevorzugt mit einer Schichtstärke von 0.3 bis 3.0 mm, durchgeführt wird.

5. Mittel für eine Beschichtung eines Werkstückes oder Vormaterials für ein Verfahren nach Anspruch 1, bestehend aus einer Oxidphase *aus Zirkonoxid,* als Hauptkomponente und einem oder mehreren Additiv(en) *aus Methylzellulose und*/*oder Mikrosilikat* als Zusatz sowie flüssigen Komponenten *aus Natriumsilikat* glas für eine Verminderung der Wärmeabstrahlung von einem auf Umformtemperatur gewärmten Werkstückes oder Vormaterials.

6. Mittel nach Anspruch 5, bei welchem die Hauptkomponenten bzw. Oxidphase aus Zirkonoxid mit einem Anteil in Gew.-% von größer 70, bevorzugt von 80 bis 98, insbesondere von 90 bis 97, gebildet ist.

7. Mittel nach Anspruch 5 oder 6, bei welchem die Additive aus Methylzellulose und/oder Mikrosilikat mit Anteilen in Ges.-% von 0.1 bis 1.0, bevorzugt 0.2 bis 0.7, bzw. 1.0 bis 10.0, bevorzugt 2.0 bis 8.0, gebildet ist.

8. Mittel nach einem der Ansprüche 5 bis 7, bei welchem als flüssige Komponente Natriumsilikatglas mit einem Anteil in Gew.-% von 15 bis 65, bevorzugt von 20 bis 60, zugesetzt ist.

9. Mittel nach einem der Ansprüche 5 bis 7, bei welchem die Oxidphase mit einen Korndurchmesser von 1 bis 50 µm gebildet ist, vorzugsweise eine mittlere Korngröße von d₅₀ = 12.5 µm aufweist.

10. Verfahren zur Warmformgebung durch Massivumformung, wie Schmieden oder Walzen, eines Werkstückes oder Vormaterials aus einer Gamma-Titan-Aluminium-Basislegierung gemäß den Ansprüchen 1 bis 4, wobei ein Mittel für eine Beschichtung zur Verminderung der Wärmeabstrahlung nach den Ansprüchen 5 bis 9 verwendet wird.

## Claims

1. A method for hot forming a work piece or ingoing material consisting of metal or an intermetallic compound by massive forming such as forging or rolling at a temperature of more than 1,000 °C, **characterized in that**, in a first step, the surface of the work piece is at least partly covered by a coating agent, consisting of an oxide phase of zirconia as a main component and one or more additive(s) of methyl cellulose and/or microsilicate as (an) additive(s) and liquid components of sodium silicate glass, and the coating is allowed to solidify, whereafter, in a subsequent step, the ingoing material is heated to a deformation temperature and transported to a forming means where it is processed or forged or rolled into a formed piece or into a rolled product.

2. The method according to claim 1, **characterized in that** the surface of the work piece or ingoing material is coated when having a temperature of more than 100 °C, preferably at 200 °C.

3. The method according to claim 1 or claim 2, **characterized in that** the surface of the work piece or ingoing material is coated by dip coating or spray coating using a coating agent.

4. The method according to any one of the claims 1 to 3, **characterized in that** the coating has a compacted layer thickness of more than 0.1 mm, preferably of 0.3 to 3.0 mm.

5. An agent for use for coating a work piece or an ingoing material according to the method according to claim 1, consisting of an oxide phase of zirconia as a main component and one or more additive(s) of methyl cellulose and/or microsilicate as (an) additive(s) and liquid components of sodium silicate glass for reducing the amount of heat radiated by a work piece or ingoing material which has been heated to forming temperature.

6. The agent according to claim 5, in which the portion of the main component or oxide phase of zirconia amounts to more than 70 % by weight, preferably to 80 to 98 % by weight, particularly to 90 to 97 % by weight.

7. The agent according to claim 5 or claim 6, in which the portion of the additives of methyl cellulose and/or microsilicate amount to 0.1 to 1.0 % by weight, preferably to 0.2 to 0.7 % by weight, and to 1.0 to 10.0 % by weight, preferably 2.0 to 8.0 % by weight, respectively.

8. The agent according to any one of the claims 5 to 7, in which sodium silicate glass is added as the liquid component at an amount of 15 to 65 % by weight, preferably of 20 to 60 % by weight.

9. The agent according to any one of the claims 5 to 7, in which the oxide phase has a grain diameter of 1 to 50 pm, preferably an average grain diameter d₅₀ of 12,5 µm.

10. The method for hot forming a work piece or ingoing material consisting of a γ-titanium aluminum base alloy by massive forming such as forging or rolling according to any one of the claims 1 to 4, wherein an agent for producing a coating which reduces heat radiation according to any one of the claims 5 to 9 is used.

## Revendications

1. Procédé pour le façonnage à chaud d'une pièce à travailler ou d'un produit de départ en métal ou en un compose intermétallique par formage de pièces massives, par exemple, par forgeage ou laminage, à une température de 1.000 °C, **caractérisé en ce que**, dans une première étape, la surface de ladite pièce à travailler est au moins partiellement revêtue d'un agent d'enrobage, consistant en un phase d'oxyde en oxyde de zirconium comme composant principal et en un ou plusieurs additifs en méthylcellulose et/ou en microsilicate comme additif(s) et en composants liquides en verre de silicate de sodium et l'enrobage est laissé se solidifier, après quoi, dans une étape suivante, ledit produit de départ est chauffé à une température de déformation, transporté à un moyen de façonnage et façonné ou forgé ou laminé par ledit moyen de façonnage pour obtenir une pièce façonnée ou laminée.

2. Procédé selon la revendication 1, **caractérisé en ce que** la surface de ladite pièce à travailler ou dudit produit de départ est enrobée quand la température de ladite pièce ou dudit produit atteint plus de 100 °C, de préférence 200 °C.

3. Procédé selon la revendication 1 ou 2, **caractérisé en ce que** la surface de ladite pièce à travailler ou dudit produit de départ est enrobée par un procédé au trempé ou par projection en utilisant un agent d'enrobage.

4. Procédé selon l'une des revendications 1 à 3, **caractérisé en ce que** l'enrobage a une épaisseur de couche compactée de plus de 0,1 mm, de préférence de 0,3 à 3,0 mm.

5. Agent pour l'enrobage d'une pièce à travailler ou d'un produit de départ pour l'utilisation dans un procédé selon la revendication 1, ledit agent consistant en une phase d'oxyde en oxyde de zirconium comme composant principal et en un ou plusieurs additifs en méthylcellulose et/ou en microsilicate comme additif(s) et en composants liquides en verre de silicate de sodium et l'enrobage pour réduire la radiation de chaleur d'une pièce à travailler ou d'un produit de départ chauffé(e) à sa température de déformation.

6. Agent selon la revendication 5, dans lequel la portion du composant principal ou de la phase d'oxyde en oxyde de zirconium atteint plus de 70 % en poids, de préférence de 80 à 98 % en poids, particulièrement de 90 à 97 % en poids.

7. Agent selon la revendication 5 ou 6, dans lequel la portion des additifs en méthylcellulose et/ou en microsilicate atteint de 0,1 à 1,0 % en poids, de préférence de 0,2 à 0,7 % en poids, et de 1,0 à 10,0 % en poids, de préférence de 2,0 à 8,0 % en poids, respectivement.

8. Agent selon l'une des revendications 5 à 7, dans lequel du verre de silicate de sodium est utilisé comme composant liquide à un taux de 15 à 65 % en poids, de préférence de 20 à 60 % en poids.

9. Agent selon l'une des revendications 5 à 7, dans lequel la phase d'oxyde a un diamètre de grains de 1 à 50 µm, de préférence une taille moyenne de grains d₅₀ de 12,5 µm.

10. Procédé selon l'une des revendications 1 à 4pour le façonnage à chaud d'une pièce à travailler ou d'un produit de départ en un alliage de base de γ-titanium-aluminium par formage de pièces massives, par exemple, par forgeage ou laminage, en utilisant un agent selon l'une des revendications 5 à 9 pour obtenir un enrobage pour réduire la radiation de chaleur.
